# EUROPÄISCHE PATENTSCHRIFT

(11) **EP 1 473 471 B1**
(45) Veröffentlichungstag und Bekanntmachung des Hinweises auf die Patenterteilung: **02.08.2006**
(21) Anmeldenummer: 04101669.2
(22) Anmeldetag: 22.04.2004
(51) Int. Cl.: F16B 25/10, F16B 39/24

(54) **Schraube mit einer Bohr- oder Eindringspitze**
Screw with a drill or penetrating bit
Vis avec un peu de foret ou un peu pénétrant

(30) Priorität: 28.04.2003 DE 10319107
(43) Veröffentlichungstag der Anmeldung: 03.11.2004
(73) Patentinhaber: SFS intec Holding AG, 9435 Heerbrugg (CH)
(72) Erfinder: Mair, Roland, 6840, Götzis (AT); Palm, Erich, 9434, Au (CH)

(56) Entgegenhaltungen:
- EP-A- 1 152 157
- US-A- 6 042 314

## Beschreibung

Die Erfindung betrifft eine Schraube mit einer Bohr- oder Eindringspitze, einem mit einem Gewinde versehenen Schaft sowie mit einer Unterlegscheibe zum Fixieren von aus einem Isoliermaterial mit beidseitigen Deckschichten bestehenden Platten an einem Unterbau. (US 6042314 A).

Die mit einer solchen Spezialschraube zu befestigenden Platten weisen an ihrer außen liegenden Oberfläche eine Kunststofffolie (Dachbahn) und an ihrer innen liegenden Oberfläche beispielsweise eine Metallplatte (Blech) auf. Zwischen diesen beiden Deckschichten ist ein fester Isolierschaum vorhanden. Für eine ordnungsgemäße Befestigung muss die Schraube mit deren Schraubenkopf und einer darunter angeordneten Scheibe durch die Kunststofffolie und den Isolierschaum hindurch geführt werden und muss daher auch in diese versenkte Lage gebracht werden können. Zu diesem Zweck konnte auch bisher schon eine selbstbohrende und selbstgewindeschneidende Schraube eingesetzt werden. Um jedoch die Unterlegscheiben und den Schraubenkopf in eine Auflagestellung auf der Metallplatte bringen zu können, musste die Kunststofffolie und der gesamte Bereich des Isolierschaums mit einem der Unterlegscheibe entsprechenden Durchmesser aufgebohrt werden. Es entsteht somit eine Art Sackloch, so dass dann die Schraube an der Metallplatte angesetzt werden kann und auch der Schraubenkopf samt Unterlegscheibe auf der Metallplatte zur Anlage kommen können. Danach muss allerdings der Raum des Sackloches wiederum mit Isoliermaterial gefüllt werden, damit hier nicht eine Wärme- bzw. Kältebrücke entsteht. Abschließend wird dann das in der abdeckenden Kunststofffolie gebildete Loch durch eine Abdeckung verklebt. Diese ganze Vorgangsweise ist arbeitsaufwendig und daher teuer.

Die Erfindung hat sich daher zur Aufgabe gestellt, eine Schraube der eingangs genannten Art zu schaffen, bei deren Einsatz das Vorbohren eines Sackloches unterbleiben und daher auch das nachträgliche Ausfüllen mit Isoliermaterial entfallen kann.

Erfindungsgemäß gelingt dies durch, die Merkmale des Anspruchs 1.

Mit dem Eindrehen der Schraube übernimmt somit die Scheibe eine Bohrfunktion, wobei die Kunststofffolie durch den Schaft der Schraube und dessen Bohrteil aufgebohrt und durch die schneidenartige Ausbildung eine Art radial auskragender Einschnitt gebildet wird zum Einführen der Scheibe. Die Scheibe windet sich dann beim Drehen der Schraube korkenzieherartig oder nach Art eines Rettichschneiders in den Isolierschaum, bis die Schreibe und somit dann auch der Schraubenkopf auf der Metallplatte zur Auflage gelangen. Trotz dieses einfachen Versenkvorganges für die Scheibe und den Schraubenkopf wurde der Isolierschaum in diesem Bereich nicht entfernt, sondern nur in gewissem Umfang aufgeschnitten. Es wird somit kein Sackloch gebildet und es bedarf keines nachträglichen Befüllens eines Leerraumes. Abschließend ist auch hier noch das in der Kunststofffolie gebildete Loch mittels einer aufzuklebenden Abdeckung zu verschließen.

Mit der erfindungsgemäßen Schraube können somit in einem Arbeitsgang und ohne zusätzliche Maßnahmen Platten mit beidseitigen Deckschichten sicher und ordnungsgemäß mit einem festen Unterbau zu verbunden werden.

Eine einfache Ausgestaltung ist dann gegeben, wenn die Scheibe als unter dem Schraubenkopf gegenüber dem Schaft verdrehsicher einsetzbare Unterlegscheibe ausgebildet ist. Es ist also einfach eine entsprechend mit einem abgebogenen Teilabschnitt und einer schneidenartigen Ausbildung versehene Unterlegscheibe verdrehsicher mit der Schraube zu verbinden, um diese Bohr- bzw. Schneidwirkung hervorrufen zu können.

Eine weitere Ausführungsvariante sieht vor, dass die Scheibe als Kopf der Schraube ausgebildet oder einstückig mit dem Kopf verbunden ist.

Wenn ferner vorgesehen wird, dass der abgebogene Teilabschnitt mit der schneidenartigen Ausbildung des Endabschnittes federnd rückführbar ausgeführt ist, wird noch eine Art zusätzlicher Verbesserung der Befestigung geschaffen, da dieser rückfedernde Endabschnitt eine Wirkung wie eine Schraubensicherung hat.

Ferner ist es möglich, dass die Scheibe verdrehsicher an den Schraubenkopf angeformt oder an den Schaft aufgepresst ist. Es sind somit alle Arten der verdrehsicheren Anordnung der Scheibe auf dem Schaft der Schraube bzw. in bezug auf den Schraubenkopf einsetzbar, um die erforderlichen Bohr- bzw. Schneidwirkung der Scheibe zu erzielen.

Daher ist eine weitere Ausführungsvariante auch darin zu sehen, dass die Scheibe an den Schraubenkopf oder den Schaft der Schraube angeschweißt oder angelötet ist. Es ist also durchaus auch eine feste unlösbare Verbindung möglich.

Eine weitere Ausgestaltung sieht vor, dass Scheibe und Schraubenkopf oder Schaft formschlüssig miteinander verbunden sind. Es ist also auch möglich, durch ein entsprechendes Umformverfahren die verdrehfeste Verbindung der Scheibe mit der Schraube zu bewerkstelligen.

Für die Schaffung einer verdrehfesten Mitnahme-Verbindung kann auch vorgesehen werden, dass der Schaft unrund oder mehrkantig ausgebildet ist und die Öffnung in der Scheibe in korrespondierender Art und Weise unrund oder mehrkantig ausgebührt ist.

Eine andere Ausführungsvariante ergibt sich dann, wenn die Scheibe als nach Art einer Schraubenlinie gewundenes Band ausgeführt ist. Die Scheiben windet sich dann nach Art eines Schraubenbandes in den Schaumstoff ein, ohne dass der Schaumstoff aus dem Bohrbereich herausbefördert wird.

In diesem Zusammenhang ist besonders vorteilhaft, wenn die als gewundenes Band ausgeführte Scheibe oder der abgebogene Teilabschnitt der Scheibe bei Auflage auf festem Untergrund federnd in eine Ebene zurückführbar ist. Es kann also immer eine besondere Art einer Schraubensicherung hervorgerufen werden.

Damit gerade im ersten Einschraubbereich und auch bis zu einer gewissen Versenkgröße der Schrauben ein rascher Vorschub gegeben ist und in diesem Einschraubbereich trotzdem kein Schaummaterial ausgeworfen wird, wird weiters vorgeschlagen, dass die Steigung der als gewundenes Band ausgeführten Scheibe wenigstens der zweifachen Gewindesteigung des auf dem Schaft der Schraube vorhandenen Gewindes entspricht.

Weitere erfindungsgemäße Maßnahmen und besondere Vorteile werden in der nachstehenden Beschreibung anhand der Zeichnungen noch näher erläutert. Es zeigen:
Fig.1 einen Schnitt nach der Linie I-I in Fig.2 durch eine an einem Unterbau durch Schrauben befestigten Platte;
Fig. 2 eine Draufsicht auf eine an einem Unterbau befestigte Platte;
Fig.3 eine Schraube mit unter dem Schraubenkopf angeordneter Scheibe;
Fig.4 eine Draufsicht auf die Schraube mit Scheibe nach Fig.3;
Fig.5 eine Ansicht der Schraube nach Fig.3;
Fig.6 eine Draufsicht auf die nach Fig.3 eingesetzte Scheibe;
Fig.7 eine Seitenansicht der nach Fig.3 eingesetzten Scheibe;
Fig.8 eine weitere Ausführungsform einer Schraube;
Fig.9 eine zusammen mit einer Schraube nach Fig.8 einsetzbare Scheibe in Draufsicht;
Fig.10 eine Seitenansicht der Scheibe nach Fig.9:
Fig.11 eine kopfseitige Draufsicht auf die Schraube nach Fig.8;
Fig.12 eine Schrägsicht der Schraube nach Fig.8;
Fig.13 eine Schrägsicht der Scheibe nach Fig.9 und Fig.10;
Fig.14 eine Schraube nach Fig.8 mit aufgesetzter Scheibe nach Fig.9;
Fig.15 einen Schnitt nach der Linie XV-XV in Fig.14;
Fig.16 eine Draufsicht auf die Kombination Schraube und Scheibe nach Fig.14.

Bei der Befestigung von Dach- und/oder Wandplatte sind in der Regel Spezialschrauben einzusetzen, um einerseits eine gute und sichere Befestigung zu bewirken und andererseits diese Befestigung schnell und kostengünstig herstellen zu können. Mit der erfindungsgemäßen Schraube 1, welche mit einer Bohr- oder Eindringspitze 2, einem mit einem Gewinde 3 versehenen Schaft 4 sowie mit einer Scheibe 5 versehen ist, soll eine aus einem Isoliermaterial 6 mit beiseitigen Deckschichten 7 und 8 bestehenden Platte 9 an einem Unterbau 10 befestigt werden. Die Deckschicht 7 ist in der Regel als Kunststofffolie ausgebildet. Das Isoliermaterial ist aus einem an sich festen Schaummaterial gebildet. Die Deckschicht 8 besteht aus einer Metallplatte nach Art eines Bleches, wobei diese innere Deckschicht in der Regel direkt auf dem Unterbau 10 aufliegt. Dieser Unterbau kann aus einem Profilbleche oder auch aus einem Metallträger oder aus Holzbalken bestehen. Die Länge der Schraube 1 ist je nach Bedarf gewählt, wobei insbesondere darauf geachtet wird, dass das Gewinde im gesetzten Zustand voll in den Unterbau 10 eingreifen kann.

Die besondere Ausbildung der Schraube 1 liegt nun darin, dass die Scheibe 5 verdrehfest an der Schraube 1 angeordnet ist, wobei zumindest ein Teilabschnitt 11 der Scheibe 5 in Eindrehrichtung der Schraube 1 spitzwinklig gegen die Bohr- oder Eindringspitze 2 hin abgebogen ist und der freie Endabschnitt dieses abgebogenen Teilabschnittes 11 eine schneidenartige Ausbildung 12 hat.

Die Scheibe 5 ist als unter dem Schraubenkopf 13 gegenüber dem Schaft 4 verdrehsicher einsetzbare Unterlegscheibe ausgebildet.

Die Scheibe 5 kann dabei auch als Kopf 13 der Schraube 1 ausgebildet sein oder aber einstückig mit dem Kopf 13 verbunden sein. Die Scheibe 5 kann auch verdrehsicher an den Schraubenkopf 13 angeformt oder an den Schaft 4 aufgepresst sein. Auch eine ganz unlösbare Anordnung ist möglich, indem die Scheibe 5 an den Schraubenkopf 13 oder den Schaft 4 der Schraube 1 angeschweißt oder angelötet ist. Weiters ist auch denkbar, dass Scheibe 5 und Schraubenkopf 13 oder Schaft 4 formschlüssig miteinander verbunden sind.

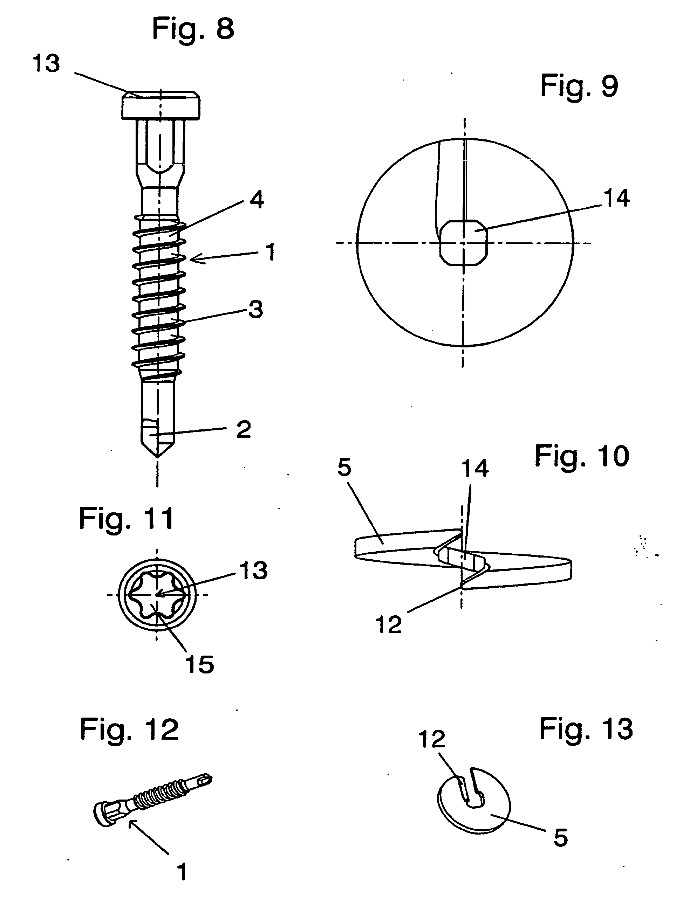

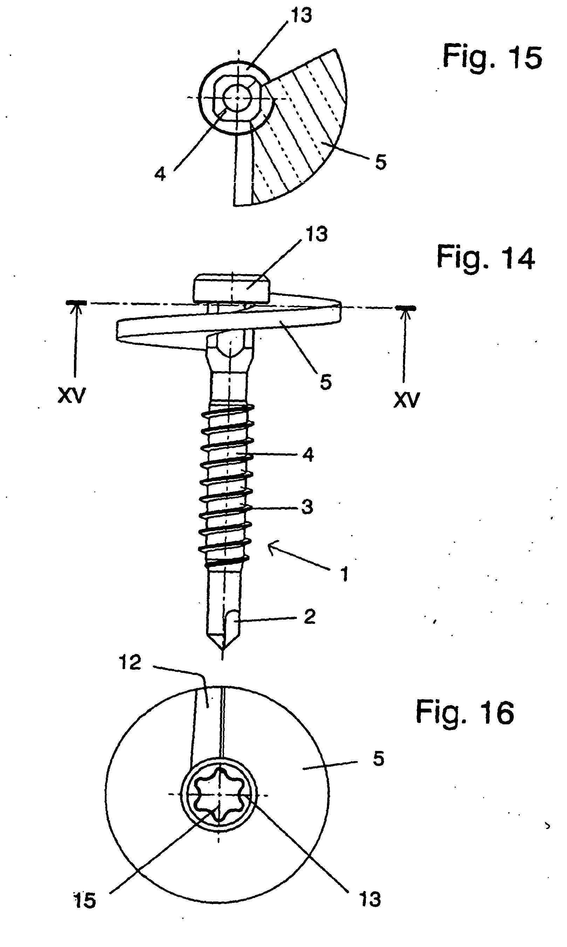

Eine weitere Ausführungsvariante ist aus den Darstellungen gemäss den Fig. 8 bis 16 zu entnehmen. Hier ist der Schaft 4 mehrkantig ausgebildet ist und die Öffnung 14 in der Scheibe 5 ist in korrespondierender Art und Weise mehrkantig ausgebührt. Dabei wäre auch denkbar den Schaft 4 und auch die Öffnung 14 in der Scheibe 5 in irgend einer Art unrund auszuführen, um dadurch eine zwangsweise Drehmitnahme der Scheibe 5 beim Eindrehen der Schraube 1 zu bewirken.

Bei dieser zweiten Ausführungsform ist auch vorgesehen, dass die Scheibe 5 als nach Art einer Schraubenlinie gewundenes Band ausgeführt ist.

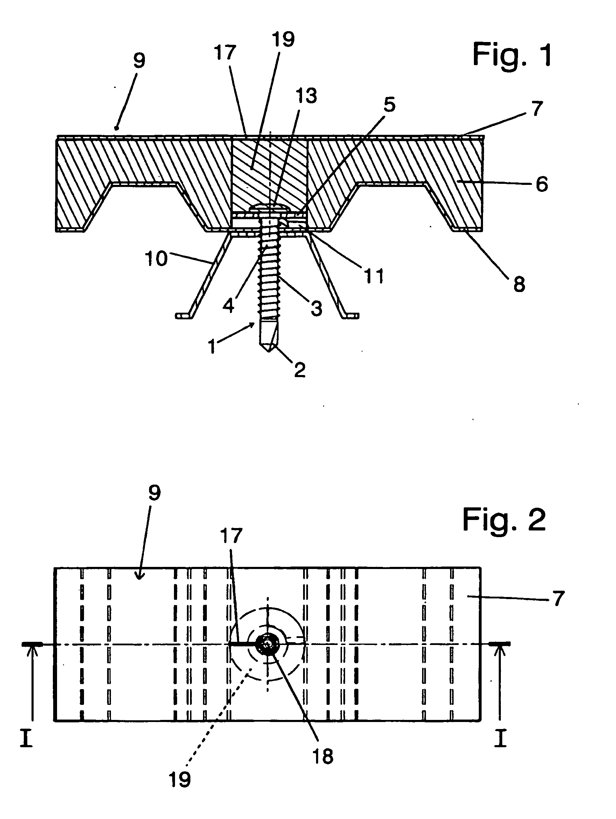

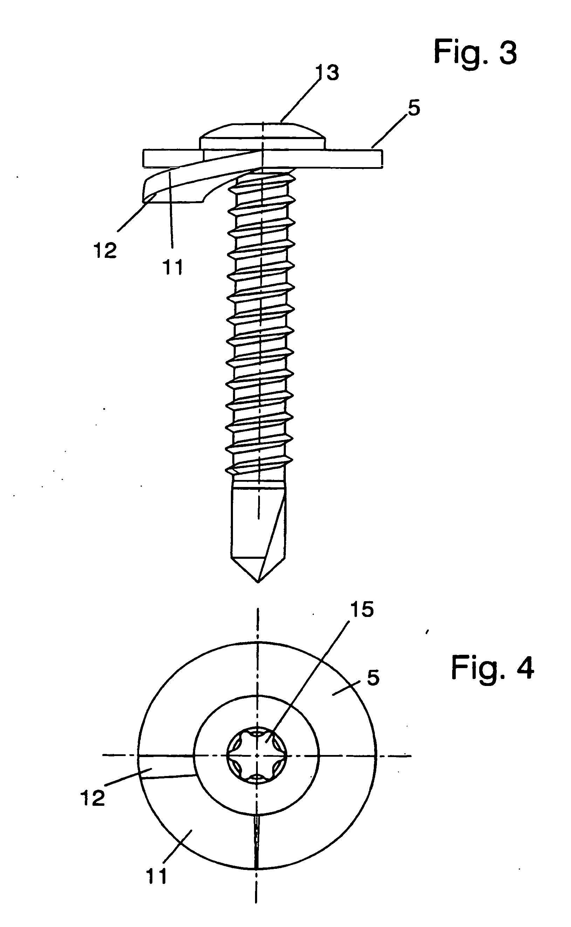

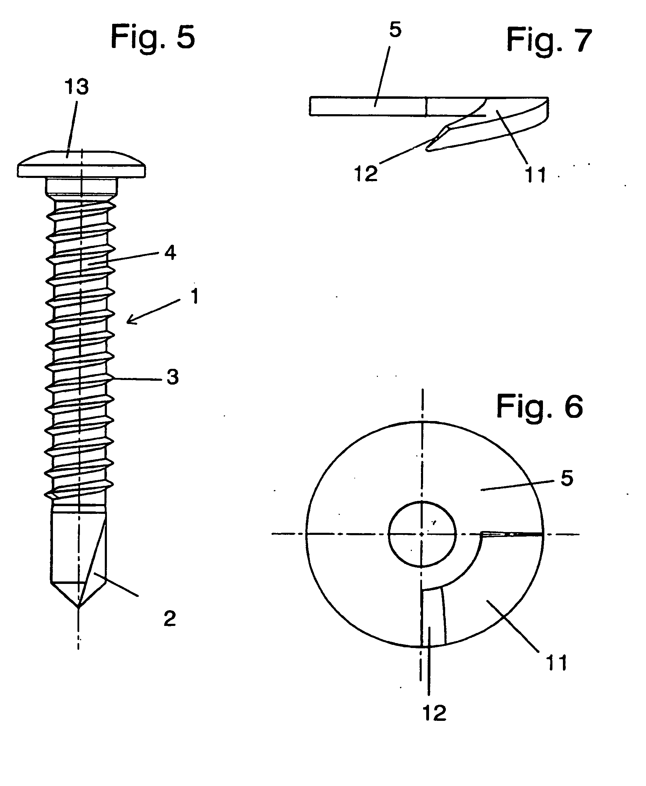

Bei der Ausgestaltung der Schraube 1 nach den Fig. 1 bis 7 kann der abgebogene Teilabschnitt 11 mit der schneidenartigen Ausbildung 12 des Endabschnittes federnd rückführbar ausgeführt sein. Daher ist es bei allen Ausführungsvarianten möglich, dass die als gewundenes Band ausgeführte Scheibe 5 oder der abgebogene Teilabschnitt 11 der Scheibe bei Auflage auf festem Untergrund 10 federnd in eine Ebene zurückführbar ist und damit eine Art Schraubenverdrehsicherung mit sich bringt.

Bei der Ausführung nach den Fig. 8 bis 16 kann noch vorgesehen werden, dass die Steigung der als gewundenes Band ausgeführten Scheibe 5 wenigstens der zweifachen Gewindesteigung des auf dem Schaft 4 der Schraube 1 vorhandenen Gewindes 3 entspricht.

Die Schraube 1 wird in der Regel mit einem Bohrteil 2 ausgestattet. Es ist aber auch möglich, hier eine Eindringspitze vorzusehen, die eventuell mit einer schlagenden Bewegung zusätzlich zur Drehbewegung ein Loch in die Deckschicht 8 formt und dann beispielsweise für ein Eindringen in einen Unterbau aus Holz sorgt.

Als Angriff für ein Eindrehwerkzeug ist in der Zeichnung ein spezieller Innenangriff 15 vorgesehen. Es kann hier jeder andere Innenangriff oder auch ein Außenangriff vorgesehen werden. Vorteilhaft ist aber, dass die Schraube 1 über den Angriff während des Eindrehens am Eindrehwerkzeug relativ gut gehalten wird.

Einleitend wurde davon gesprochen, dass die außen liegende Deckschicht 7 als eine Art Kunststofffolie ausgebildet ist und die innen liegende Deckschicht 8 als Metallplatte ausgeführt ist. Eine erfindungsgemäß ausgeführte Schraube könnte aber auch bei der Befestigung von Platten eingesetzt werden, bei welchen beide Deckschichten 7 und 8 als Metallplatten ausgeführt sind. Dabei können auch beide Deckschichten von Profilblechen gebildet sein.

Je nachdem, wie die Deckschicht 7 und auch das darunter liegende Isoliermaterial ausgeführt sind, muss der freie Endabschnitt des abgebogenen Teilabschnittes eine mehr oder weniger gute schneidenartige Ausbildung aufweisen. Die Scheibe 5 selbst kann aus rostfreiem Stahl, aber auch aus Kohlenstoffstahl ausgeführt werden. Gegebenenfalls kann auch ein Federstahl eingesetzt werden. Die Ausbildung, die Länge und die Art des Gewindes 3 der Schraube kann in Anpassung an den Unterbau 10 gewählt werden.

Mit der vorstehend erläuterten Schraube können Platten 9 mit an ihrer einen außen liegenden Oberfläche vorgesehener Kunststofffolie (Dachbahn) und mit an ihrer innen liegenden Oberfläche vorgesehener Metallplatte (Blech) in einfacher Weise in einem Arbeitsgang an einem Unterbau 10 befestigt werden. Für eine ordnungsgemäße Befestigung wird die Schraube 1 mit deren Schraubenkopf 13 und der darunter angeordneten Scheibe 5 durch die Kunststofffolie und den Isolierschaum hindurch eingeführt. Mit dem Eindrehen der Schraube 1 übernimmt nun die Scheibe 5 eine Bohrfunktion, wobei die Kunststofffolie durch den Schaft 4 der Schraube 1 und dessen Bohrteil 1 aufgebohrt und ein kleines Loch 18 gebildet. Durch die schneidenartige Ausbildung 12 des spitzwinklig abgebogenen Teilabschnittes 11 wird eine Art radial auskragender Einschnitt 17 gebildet zum Einführen der Scheibe 5 in den Bereich unterhalb der Deckschicht 7. Die Scheibe 5 windet sich dann beim Drehen der Schraube 1 korkenzieherartig oder nach Art eines Rettichschneiders in den Isolierschaum 6, bis die Schreibe 5 und somit dann auch der Schraubenkopf 13 auf der als Metallplatte ausgeführten Deckschicht 8 zur Auflage gelangen. Trotz dieses einfachen Versenkvorganges für die Scheibe 5 und den Schraubenkopf 13 wurde der Isolierschaum 6 in diesem Bereich nicht entfernt, sondern nur in gewissem Umfang aufgeschnitten. Es wird somit kein vorab herzustellendes Sackloch 19 gebildet und es bedarf keines nachträglichen Befüllens eines Leerraumes. Abschließend wird hier noch das in der Kunststofffolie gebildete Loch 18 und der Einschnitt 17 mittels einer aufzuklebenden Abdeckung verschlossen.

Der freie Endabschnitt des abgebogenen Teilabschnittes 11 der Scheibe 5 hat eine schneidenartige Ausbildung, und zwar auch bei der Ausführung als gewundenes Band. Eine schneidenartige Ausbildung 12 ist aber auch dann schon gegeben, wenn die Scheibe selbst aus relativ dünnem Material gefertigt ist. Es bedarf dann keiner zusätzlichen Bearbeitung zu einer Schneide, da das dünne Material von selbst in der Lage ist, in die Deckschicht 7 einzudringen und das Isoliermaterial "aufzubohren" und somit die schneidenartige Ausbildung 12 zu bilden.

## Patentansprüche

1. Schraube mit einer Bohr- oder Eindringspitze, einem mit einem Gewinde versehenen Schaft sowie mit einer Unterlegscheibe zum Fixieren von aus einem Isoliermaterial mit beidseitigen Deckschichten bestehenden Platten an einem Unterbau, **dadurch gekennzeichnet, dass** die Unterlegscheibe (5) verdrehfest an der Schraube (1) angeordnet ist, wobei zumindest ein Teilabschnitt (11) der Scheibe (5) in Eindrehrichtung der Schraube (1) spitzwinklig gegen die Bohr- oder Eindringspitze (2) hin abgebogen ist und der freie Endabschnitt dieses abgebogenen Teilabschnittes (11) eine schneidenartige Ausbildung (12) hat, so dass die Unterlegscheibe (5) mit dem Eindrehen der Schraube (1) eine Bohrfunktion übernimmt, und dass der abgebogene Teilabschnitt (11) der Unterlegscheibe (5) mit der schneidenartigen Ausbildung (12) des Endabschnittes (11) federnd rückführbar ausgeführt ist.

2. Schraube nach Anspruch 1, **dadurch gekennzeichnet, dass** die Unterlegscheibe (5) als unter dem Schraubenkopf (13) gegenüber dem Schaft (4) verdrehsicher eingesetzt ist.

3. Schraube nach Anspruch 1, **dadurch gekennzeichnet, dass** die Unterlegscheibe (5) als Kopf (13) der Schraube (1) ausgebildet oder einstückig mit dem Kopf (13) verbunden ist.

4. Schraube nach den Ansprüchen 1 bis 3, **dadurch gekennzeichnet, dass** die Unterlegscheibe (5) verdrehsicher an den Schraubenkopf (13) angeformt oder an den Schaft (4) aufgepresst ist.

5. Schraube nach den Ansprüchen 1 bis 3, **dadurch gekennzeichnet, dass** die Unterlegscheibe (5) an den Schraubenkopf (13) oder den Schaft (4) der Schraube (1) angeschweißt oder angelötet ist.

6. Schraube nach den Ansprüchen 1 bis 3, **dadurch gekennzeichnet, dass** Unterlegscheibe (5) und Schraubenkopf (13) oder Schaft (4) formschlüssig miteinander verbunden sind.

7. Schraube nach Anspruch 6, **dadurch gekennzeichnet, dass** der Schaft (4) unrund oder mehrkantig ausgebildet ist und die Öffnung (14) in der Unterlegscheibe (5) in korrespondierender Art und Weise unrund oder mehrkantig ausgebührt ist.

8. Schraube nach einem oder mehreren der Ansprüche 1 bis 7, **dadurch gekennzeichnet, dass** die Unterlegscheibe (5) als nach Art einer Schraubenlinie gewundenes Band ausgeführt ist.

9. Schraube nach einem oder mehreren der Ansprüche 1 bis 8, **dadurch gekennzeichnet, dass** die als gewundenes Band ausgeführte Unterlegscheibe (5) oder der abgebogene Teilabschnitt (11) der Untedegscheibe (5) bei Auflage auf festem Untergrund federnd in eine Ebene zurückführbar ist.

10. Schrauben nach Anspruch 8, **dadurch gekennzeichnet, dass** die Steigung der als gewundenes Band ausgeführten Unterlegscheibe (5) wenigstens der zweifachen Gewindesteigung des auf dem Schaft (4) der Schraube (1) vorhandenen Gewindes (3) entspricht.

## Claims

1. A screw having a drilling or penetrating tip, a shank provided with a screw-thread and with a washer for securing to a substructure panels consisting of an insulating material with cover layers on both sides, **characterised in that** the washer (5) is mounted on the screw (1) in a manner precluding relative rotation, wherein at least one portion (11) of the washer (5) is bent at an acute angle in the screwing-in direction of the screw (1) towards the drilling or penetrating tip (2) and the free end portion of this bent-down portion (11) is formed in the manner of a cutting-edge (12) so that the washer (5) assumes a drilling function when the screw (1) is screwed in, and **in that** with the end portion (11) formed in the manner of a cutting-edge (12) the bent-down portion (11) of the washer (5) can return in the manner of a spring.

2. A screw according to Claim 1, **characterised in that** the washer (5) is inserted under the screw head (13) in a manner precluding rotation relative to the shank (4).

3. A screw according to Claim 1, **characterised in that** the washer (5) is in the form of a head (13) of the screw (1) or is connected in one piece with the head (13).

4. A screw according to Claims 1 to 3, **characterised in that** the washer (5) is formed on the screw head (13) or is pressed on to the shank (4) in a manner precluding relative rotation.

5. A screw according to Claims 1 to 3, **characterised in that** the washer (5) is welded or soldered to the screw head (13) or to the shank (4) of the screw (1).

6. A screw according to Claims 1 to 3, **characterised in that** the washer (5) and screw head (13) or shank (4) are connected to one another in a form-locking manner.

7. A screw according to Claim 6, **characterised in that** the shank (4) is formed out-of-round or multi-edged and the opening (14) in the washer (5) is bored out correspondingly out-of-round or multi-edged.

8. A screw according to one or more of Claims 1 to 7, **characterised in that** the washer (5) is formed as a strip coiled in the manner of a helix.

9. A screw according to one or more of Claims 1 to 8, **characterised in that** the washer (5) formed as a coiled strip or the bent-down portion (11) of the washer (5) can be returned spring-like into one plane when it bears on a fixed substructure.

10. A screw according to Claim 8, **characterised in that** the inclination of the washer (5) formed as coiled strip corresponds at least to twice the pitch of the screw-thread (3) provided on the shank (4) of the screw (1).

## Revendications

1. Vis comportant une pointe de forage ou de pénétration, une tige pourvue d'un filetage et une rondelle permettant de fixer des plaques constituées d'un matériau isolant avec des couches de recouvrement sur les deux côtés, sur une infrastructure,
**caractérisée en ce que**
la rondelle (5) est fixe en rotation sur la vis (1), au moins un segment (11) de la rondelle (5) dans la direction de rotation de la vis (1) est cintré avec un angle aigu par rapport à la pointe de forage ou de pénétration, et la section finale libre de ce segment courbé (11) a une forme de tranchant (12), de sorte que la rondelle assume une fonction de forage lorsque l'on fait tourner la vis (1),
et le segment courbé (11) de la rondelle (5), avec la forme de tranchant (12) du segment terminal (11) a une action de rappel élastique.

2. Vis selon la revendication 1,
**caractérisée en ce que**
la rondelle (5) est fixée en rotation en dessous de la tête de vis (13) par rapport à la tige (4).

3. Vis selon la revendication 1,
**caractérisée en ce que**
la rondelle (5) est en forme de tête (13) de la vis (1), ou fait une seule pièce avec la tête (13).

4. Vis selon les revendications 1 à 3,
**caractérisée en ce que**
la rondelle (5) est moulée solidaire en rotation sur la tête de vis (13) ou comprimée sur la tige (4).

5. Vis selon les revendications 1 à 3,
**caractérisée en ce que**
la rondelle (5) est soudée ou brasée à la tête de vis (13) ou à la tige (4) de la vis (1).

6. Vis selon les revendications 1 à 3,
**caractérisée en ce que**
la rondelle (5) et la tête de vis (13) ou la tige (4) sont reliées entre elles par complémentarité de forme.

7. Vis selon la revendication 6,
**caractérisée en ce que**
la tige (4) est excentrique ou polygonale, et de manière correspondante l'ouverture (14) de la rondelle (5) est réalisée excentrique ou polygonale.

8. Vis selon une ou plusieurs des revendications 1 à 7,
**caractérisée en ce que**
la rondelle (5) est en forme de ruban enroulé à la manière d'une hélice.

9. Vis selon une ou plusieurs des revendications 1 à 8,
**caractérisée en ce que**
la rondelle (5) réalisée sous forme de ruban enroulé ou encore le segment courbé (11) de la rondelle (5) peut, lorsqu'elle est placée sur un support fixe, revient élastique dans un plan.

10. Vis selon la revendication 8,
**caractérisée en ce que**
l'inclinaison de la rondelle (5) réalisée sous forme de ruban enroulé correspond au moins au double du pas du filetage (3) présent sur la tige (4) de la vis (1).
